# DEMANDE DE BREVET EUROPEEN

(11) **EP 0 642 737 A1**
(43) Date de publication de la demande: **15.03.1995**
(21) Numéro de dépôt: 94402052.8
(22) Date de dépôt: 14.09.1994
(51) Int. Cl.: A21D 13/06

(54) **Pain sans gluten et son procédé de fabrication**

(30) Priorité: 14.09.1993 FR 9310948
(71) Demandeur: Woestelandt, Yves, F-83400 Hyeres (FR)
(72) Inventeur: Woestelandt, Yves, F-83400 Hyeres (FR)
(74) Mandataire: Casalonga, Axel

(57) **Abrégé**

Pain sans gluten, caractérisé par le fait qu'il a été réalisé à base de farine sans gluten et d'oeuf, et éventuellement de levure chimique et de levure boulangère.

## Description

La présente invention est relative à du pain sans gluten et à son procédé de fabrication.

On connaît des pâtisseries ou des produits alimentaires sans gluten, mais jusqu'à présent l'homme du métier s'est toujours heurté à des problèmes de panification liés aux caractéristiques particulières d'une farine sans gluten.

Les essais qui ont été réalisés jusqu'à ce jour en essayant de fabriquer du pain sans gluten en remplaçant la farine habituellement utilisée, par de la farine sans gluten, ont toujours conduit à des produits friables ne présentant nullement les caractéristiques du pain. On considérait que cette farine ne pouvait être travaillée. En particulier, il n'était pas possible en utilisant de l'eau généralement utilisée pour la fabrication du pain, de lier la farine et de travailler ensuite la pâte.

Par ailleurs, il n'était pas possible d'obtenir de développement d'une pâte, la farine ne se liant pas à l'eau.

L'inventeur vient de découvrir un procédé de fabrication permettant de lier une farine sans gluten et d'avoir un développement de la pâte. Celui-ci a en effet découvert qu'il était possible de développer une pâte à base de farine sans gluten en utilisant de l'oeuf. Il a constaté en particulier qu'il était possible de doubler le volume de la pâte, ce qui permet une panification.

L'invention a donc pour objet un pain à base de farine sans gluten.

Un autre objet de l'invention est constitué par un procédé de fabrication d'un pain sans gluten.

D'autres objets de l'invention apparaîtront à la lecture de la description et des exemples qui suivent.

Le pain conforme à l'invention est essentiellement caractérisé par le fait qu'il résulte de l'utilisation d'une farine sans gluten et d'oeuf.

La proportion de farine sans gluten est généralement comprise entre 30 et 70% par rapport au poids total de la composition et de préférence entre 40 et 70% en poids, la quantité d'oeuf est comprise de préférence entre 70 et 30% et de préférence entre 60 et 40%, le rapport en poids entre la farine sans gluten et l'oeuf étant de préférence compris entre 0,8 et 1,2.

La farine utilisée est de la farine de blé boulangère telle que la farine du type 55 ou 65, c'est-à-dire à 55 ou 65% de farine brute ou complète, dont on a extrait le gluten selon les procédés classiques, en particulier par lavages.

On utilise de préférence uniquement du blanc d'oeuf.

Il est possible de rajouter à la pâte, dans une forme de réalisation de l'invention, de la levure chimique et/ou boulangère.

La levure chimique est généralement utilisée dans des proportions comprises entre 1 et 1,2% en poids. La levure boulangère est une levure habituellement utilisée dans le domaine de la panification et elle est utilisée dans des proportions comprises entre 3 et 5,5%. On rajoute éventuellement également dans la composition du sel ou du sucre pour conférer de la douceur, et éventuellement du beurre pour donner du moelleux, de la douceur et de la saveur.

Le procédé conforme à l'invention qui permet de préparer un pain sans gluten consiste essentiellement à mélanger de la farine sans gluten et de l'oeuf, de préférence du blanc d'oeuf, et à battre l'ensemble, de façon à foisonner pendant une durée comprise entre 5 et 15 minutes.

On rajoute éventuellement ensuite la levure chimique et/ou boulangère ainsi que les autres ingrédients mentionnés ci-dessus, et on bat à nouveau pendant une durée comprise entre 5 et 15 minutes.

On constate que la pâte ainsi préparée est relativement fluide, versée dans un moule dans lequel elle remplit 1/3 du moule, on constate un doublement et jusqu'à un triplement du volume.

Après développement, cette pâte est placée au four et on constate, après cuisson, un produit qui présente les caractéristiques et le goût se rapprochant sensiblement de celui du pain de mie.

On constate également que contrairement à ce qui se passe en utilisant de l'eau utilisée classiquement dans la fabrication du pain, que le pain ne s'émiette pas. n présente par ailleurs de bonnes qualités organoleptiques.

Les exemples suivants sont destinés à illustrer l'invention sans pour autant présenter un caractère limitatif.

### EXEMPLE 1

On a préparé la pâte suivante :
1 kg de farine sans gluten
1 kg d'oeuf (blanc d'oeuf)

L'ensemble est battu au fouet pendant 15 minutes. La pâte mousseuse ainsi formée relativement fluide est versée dans un moule, on constate au bout de 12 heures que le volume est multiplié par 3. On constate que la pâte est bien liée. Passée au four, on obtient un pain présentant les caractéristiques d'un pain qui ne s'émiette pas, qui a de bonnes propriétés organoleptiques. Ce pain ressemble à du pain de mie.

### EXEMPLE 2

On a préparé la pâte suivante :
1 kg de farine sans gluten
1 kg d'oeuf (blanc d'oeuf)
levure chimique
sel et 100 g de beurre.

L'ensemble a été battu au fouet pendant 10 minutes. On a rajouté ensuite de la levure boulangère et on a battu l'ensemble pendant 10 minutes supplémentaires. La pâte ainsi formée relativement fluide a été versée dans un moule, on a constaté au bout de 12 heures une augmentation de volume qui a doublé. On constate que la farine est bien liée. Passée au four, on obtient un pain présentant les caractéristiques d'un pain qui ne s'émiette pas, qui a de bonnes propriétés organoleptiques. Ce pain ressemble à du pain de mie.

## Revendications

1. Pain sans gluten, caractérisé par le fait qu'il a été réalisé à base de farine sans gluten et d'oeuf.

2. Pain selon la revendication 1, caractérisé par le fait qu'il comprend également de la levure chimique et/ou boulangère.

3. Pâte à pain, caractérisée par le fait qu'elle comporte de la farine sans gluten et de l'oeuf.

4. Pâte à pain selon la revendication 2, caractérisée par le fait que la farine sans gluten constitue 30 à 70% en poids de la composition et que l'oeuf constitue 70 à 30% en poids.

5. Pâte selon les revendications 2 ou 3, caractérisée par le fait que le rapport de la farine sans gluten à l'oeuf est compris entre 0,8 et 1,2.

6. Pâte à pain selon l'une quelconque des revendications 3 à 5, caractérisée par le fait que la farine est de la farine de blé.

7. Pâte à pain selon l'une quelconque des revendications 3 à 6, caractérisée par le fait qu'elle comprend en plus de la levure chimique et/ou boulangère.

8. Procédé de fabrication d'un pain sans gluten, caractérisé par le fait que l'on mélange de la farine sans gluten avec de l'oeuf et qu'on bat ensuite pendant une durée comprise entre 5 et 30 minutes, la pâte ainsi formée est laissée au repos et se développe, puis cuite au four.

9. Procédé selon la revendication 8, caractérisé par le fait que l'on introduit dans la pâte de la levure chimique et/ou de la levure boulangère.

10. Procédé selon la revendication 5, caractérisé par le fait que le rapport en poids de la farine sans gluten à l'oeuf est compris entre 0,8 et 1,2.

11. Procédé de fabrication selon l'une quelconque des revendications 8 à 10, caractérisé par le fait que l'on utilise du blanc d'oeuf.

12. Pain sans gluten obtenu par la mise en oeuvre du procédé selon l'une quelconque des revendications 8 à 11.
